# EUROPÄISCHE PATENTANMELDUNG

(11) **EP 1 817 954 A2**
(43) Veröffentlichungstag der Anmeldung: **15.08.2007**
(21) Anmeldenummer: 06026178.1
(22) Anmeldetag: 18.12.2006
(51) Int. Cl.: A01G 13/02

(54) **Bahnenware zum Schutz von Pflanzenkulturen**

(30) Priorität: 08.02.2006 DE 102006005688
(71) Anmelder: Carl Freudenberg KG, 69469 Weinheim (DE)
(72) Erfinder: Mayr, Peter Dr., 67705 Trippstadt (DE); Göttel, Matthias, 67659 Kaiserslautern (DE); Geiser, Dietmar, 68165 Mannheim (DE)

(57) **Zusammenfassung**

Bahnenware (1) zum Schutz von Pflanzenkulturen gegen Witterungseinftüsse, umfassend mindestens zwei Bahnen (2, 3) von Vliesstoffen und/oder Folien, die zumindest teilweise einander übedappen und in den Überiapp-Bereichen (4) stoffschlüssig miteinander verbunden sind, wobei die Verbindung als streifenförmiges Muster (5) ausgebildet ist, die sich aus vereinzelten Strukturen (6) zusammensetzt sowie Verfahren zu dessen Herstellung.

## Beschreibung

### Technisches Gebiet

Die Erfindung betrifft eine Bahnenware zum Schutz von Pflanzenkulturen gegen Witterungseinflüsse, umfassend mindestens zwei Bahnen von Vliesstoffen und/oder Folien, die zumindest teilweise einander überlappen und in den Überlapp-Bereichen stoffschlüssig miteinander verbunden sind. Des Weiteren betrifft die Erfindung ein Verfahren zur Herstellung der Bahnenware sowie dessen Verwendung.

### Stand der Technik

Bahnenwaren zum Schutz von Pflanzenkulturen sind aus der DE 9111254 U bekannt. Bei der vorbekannten Bahnenware handelt es sich um licht-, luft- und feuchtigkeitsdurchlässige Vliesstoffbahnen, wobei mehrere Vliesstoff- oder Folienbahnen stoffschlüssig, beispielsweise durch Schweißen, entlang der Längskanten miteinander verbunden sind, um eine größere Breite der Bahnenware zu erreichen.

Bei der Handhabung dieser aus mehreren Vliesstoff- oder Folienbahnen zusammengesetzten Bahnenware hat sich herausgestellt, dass diese bei der Handhabung einreißen können. Eine Schwachstelle ist dabei insbesondere die Verbindungen zwischen den einzelnen Bahnen. Das Einreißen der Bahnenware hat eine verkürzte Gebrauchsdauer sowie eine Verschlechterung der Gebrauchseigenschaften zur Folge. Durch die entstandenen Risse treten beispielsweise die zu schützenden Pflanzenkulturen direkt mit der Außenumgebung in Kontakt und der Schutz der Pflanzenkulturen ist eingeschränkt.

### Darstellung der Erfindung

Der Erfindung liegt die Aufgabe zugrunde, eine Bahnenware zum Schutz von Pflanzenkulturen bereitzustellen, die eine verbesserte Rissbeständigkeit und insbesondere eine verbesserter Weiterreißfestigkeit aufweist.

Diese Aufgabe wird mit den Merkmalen von Anspruch 1, 12 und 13 gelöst. Auf vorteilhafte Ausgestaltungen nehmen die Unteransprüche Bezug.

Zur Lösung der Aufgabe ist die Verbindung als streifenförmiges Muster ausgebildet, die sich wiederum aus vereinzelten Strukturen zusammensetzt. Strukturen im Sinne der Erfindung sind flächige Abschnitte beliebiger Geometrie, in denen zwei überlappende Bahnen stoffschlüssig miteinander verbunden sind. Durch die vereinzelten Strukturen ergibt sich eine wesentlich verbesserte Weiterreißfestigkeit, da sich zwar die Verbindung in einer einzelnen Struktur lösen kann, aber sich der Riss einer einzelnen Struktur nicht auf eine andere Struktur übertragen kann. Die Flächeninhalte von Gravurpunkten bewegen sich erfindungsgemäß im Bereich von 0,2 bis 2 mm², vorzugsweise von 0,4 bis 1 mm². Diese Flächeninhalte bieten eine gute Reißfestigkeit bei gleichzeitig einfacher Herstellbarkeit. Des Weiteren bleibt die Bahnenware auch in den Überlapp-Bereichen flexibel. Bevorzugt beträgt das Flächengewicht der Vliesstoff- oder Folienbahnen ein Flächengewichten von 10 bis 150 g/m², insbesondere von 15 bis 60 g/m². Der gewählte Bereich ergibt eine hohe mechanische Stabilität bei einer guten Handhabbarkeit. Vorzugsweise werden Vliesstoff- oder Folienbahnen mit isotropen mechanischen Eigenschaften eingesetzt, also Vliesstoffe oder Folien, die in Maschinenlaufrichtung und quer dazu etwa gleiche Werte für die Höchstzugkraft und Höchstzugdehnung aufweisen. Dadurch ist die Herstellung der Bahnenware vereinfacht, da die Verbindung der Vliesstoff- oder Folienbahnen an jeder Seite erfolgen kann. Des Weiteren ergibt sich eine Bahnenware, die in jeder Richtung die gleichen Eigenschaften aufweist. Der eingesetzte Vliesstoff weist insbesondere gute Dehneigenschaften und damit gute Arbeitsaufnahmeeigenschaften auf, so dass ein Windangriff durch Dehnung des Materials abgefangen wird. Die Bahnenware kann mindestens zwei Vliesstoffbahnen und/oder Folienbahnen umfassen, von denen die Bahnen jeweils mit den benachbarten Bahnen überlappen und in diesen Überlapp-Bereichen stoffschlüssig miteinander verbunden sind.

Die Breite der Überlapp-Bereiche der Vliesstoff- oder Folienbahnen bewegt sich vorzugsweise zwischen 5 bis 35 cm. Die Überdeckungsbereich ermöglicht eine materialsparende Verbindung bei gleichzeitig guter Festigkeit.

Die Bahnenware kann in den Überlapp-Bereichen einen Verstärkungsstreifen aus Folie und/oder aus einem Vliesstoff aufweisen, der mit den Vliesstoff- oder Folienbahnen stoffschlüssig verbunden ist. Dadurch verbessert sich nochmals die Rissbeständigkeit der Bahnenware. Die Vliesstoffbahnen und/oder Folienbahnen und der Verstärkungsstreifen materialeinheitlich sein und beispielsweise aus Polypropylen bestehen.

Die Strukturen können als Punkte, Stäbchen, Kreisbögen oder Stäbchen mit Verdickungen an beiden Enden ausgebildet sein. Die Stäbchen sind dabei insbesondere angerundet ausgeführt. Diese Ausgestaltungen verbessern das Einreißverhalten, da spitzwinklige Geometrien als bevorzugte Anrissstellen vermieden werden. Die Strukturen können auch Mischungen aus Stäbchen, Kreisbögen oder Stäbchen mit Verdickungen sein. Ebenfalls kann auch jede beliebige Linearkombination der genannten Geometrien in Betracht gezogen werden.

Es können zumindest zwei einander parallele Muster in dem Überlapp-Bereich angeordnet sein. Die zwei parallelen Muster verbessern die Festigkeit der Verbindung und verbessern das Rissverhalten der Bahnenware. Bei sehr starken mechanischen Beanspruchungen fängt das zweite parallele Muster einen Rissfortschritt auf.

Die Streifen können unterbrochen ausgebildet sein. Dadurch ist die Weiterreißfestigkeit der Bahnenware nochmals verbessert.

In einer weiteren Ausführung können zumindest zwei Muster aus gegeneinander versetzten Abschnitten von Strukturen bestehen, wobei die Abschnitte an ihren Enden durch quer verlaufende Abschnitte von Strukturen miteinander verbunden sein können. Diese Geometrie verbessert ebenfalls die Weiterreißfestigkeit.

Die stoffschlüssige Verbindung kann durch eine Ultraschall-Verschweißung gebildet sein. Ultraschall-Schweißen ist ein kostengünstiges und großserientaugliches Verfahren zum stoffschlüssigen Verbinden von Bahnenware. Die Verbindung erfolgt dabei vorzugsweise ohne Zuschlag oder Hilfsstoffe, was insbesondere bei der Anwendung der Bahnenware im Lebensmittelbereich vorteilhaft ist. Eine andere stoffschlüssige Verbindungsart ist das Kleben.

Die Flächengewichte der Vliesstoffbahnen können 10 bis 150 g/m² betragen.

Eine weitere Lösung der Aufgabe umfasst ein Verfahren zur Herstellung der Bahnenware nach einem der vorherigen Ansprüche, aufweisend die Maßnahmen:
a. Kombinieren von mindestens zwei Vliesstoff- und/oder Folienbahnen aus thermoplastischen Kunststoffen, so dass diese jeweils auf einer Seite parallel zu ihrer Längserstreckung miteinander überlappen, und
b. Ultraschallverschweißen der Vliesstoff- und/oder Folienbahnen in den Überlappungsbereichen, so dass ein streifenförmiges Muster aus vereinzelten Strukturen entsteht.

Die Vliesstoffbahnen können aus Spinnvliesstoffen oder Stapelfaservliesstoffen gebildet sein. Zur Herstellung der erfindungsgemäßen Vliesstoff- oder Folienbahn kommen vorzugsweise synthetische Polymere, insbesondere Polyester, Polyamid, Polyolefin oder Polypropylen zum Einsatz. Die Vliesstoffe können dabei Fasern und/oder Filamente aus verschiedenen thermoplastischen Polymeren enthalten, vorzugsweise aus Polypropylen, Metallocen-Polypropylen, CoPP oder Polyester, CoPET oder Mischungen aus diesen Kunststoffen. Der Vliesstoff kann neben Fasern aus den genannten Polymeren auch noch Bindefasem enthalten, welche im Verlaufe des Herstellungsverfahrens schmelzen und die Bahnenware verfestigen. Derartige Bindefasem sind beispielsweise Bikomponentenfasem, Kem-Mantelfasern oder Pie-Fasem. Die erfindungsgemäß zum Einsatz kommenden Vliesstoffe können aus unterschiedlichen Fasertypen in unterschiedlichen Titerbereichen bestehen, insbesondere einem Titer von 0,1 bis 10 dtex, vorzugsweise von 1,3 bis 4 dtex. Unter Fasern sind im Rahmen dieser Beschreibung Fäden endlicher Länge zu verstehen, also Fäden mit Längen bis in den Dezimeterbereich. Unter Filamenten sind im Rahmen dieser Beschreibung Fäden praktisch unendlicher Länge zu verstehen, also Fäden mit Längen oberhalb des Dezimeterbereichs. Die erfindungsgemäß zum Einsatz kommenden Vliesstoffe werden beispielsweise durch Vernadeln und/oder durch Wasserstrahlbehandlung und/oder durch Einsatz eines chemischen Binders und/oder von Bindefasern verfestigt. Vorzugsweise erfolgt die Verfestigung der Vliesstoffe mittels,einer Kalander-Behandlung, ganz besonders bevorzugt durch eine Punktverfestigung. Diese Verfestigung erfolgt vorzugsweise ohne Zusatzstoffe, was insbesondere im Lebensmittelbereich vorteilhaft ist.

Wenn dem Vliesstoff oder der Folie als Zusatzstoff einen UV-Stabilisator oder einen Farb-Masterbatch aufweist, steigt die Gebrauchsdauer der Bahnenware.

Die für die Bahnenware verwendbaren Vliesstoffe können mit verschiedenen Vliesbildungstechniken erzeugt worden sein. Die Vliesstoffbahnen können beispielsweise durch Spinnvliesverfahren, Kardierverfahren, Schmelzblasverfahren, Nassvlies-Verfahren, elektrostatisches Spinnen, Meltblown-Verfahren oder aerodynamische Vliesherstellungsverfahren hergestellt werden. Die für die Bahnenware verwendbaren Folien können ebenfalls durch verschiedene Herstellungsverfahren erzeugt werden, beispielsweise durch Extrusion oder durch Blasformen.

Die erfindungsgemäße Bahnenware wird zum Schutz von Pflanzenkulturen gegen Witterungseinflüsse eingesetzt. Derartige Anwendungen sind im Gartenbau und in der Landwirtschaft bekannt. Weitere Anwendungsgebiete sind das Abdecken von Mieten oder die Verwendung der Bahnenware als Baumumhüllung.

### Ausführung der Erfindung

Die erfindungsgemäße Bahnenware wird nachfolgend anhand der Figuren näher erläutert. Diese zeigen, jeweils schematisch:
Fig. 1 eine erfindungsgemäße Bahnenware in der Draufsicht;
Fig. 2 die Bahnenware gemäß Figur 1 in der Seitenansicht;
Fig. 3 eine erste Ausführung des Musters;
Fig. 4 eine zweite Ausführung des Musters;
Fig. 5 eine dritte Ausführung des Musters;
Fig. 6 eine vierte Ausführung des Musters;
Fig. 7 eine fünfte Ausführung des Musters;
Fig. 8 eine sechste Ausführung des Musters;
Fig. 9 eine siebte Ausführung des Musters.

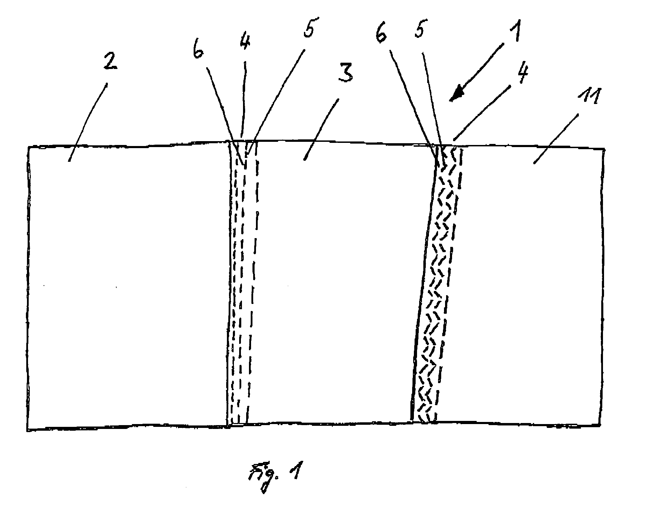

Figur 1 zeigt eine Bahnenware 1 zum Schutz von Pflanzenkulturen gegen Witterungseinflüsse. Die Bahnenware 1 besteht aus drei parallel zueinander ausgerichteten Bahnen 2, 3, 11 die in dieser Ausführung aus einem Vliesstoff gebildet sind. Der Vliesstoff weist ein Flächengewicht von 18 g/m² auf, ist als Stapelfaservlies ausgebildet und besteht aus Polypropylenfasern. Die Luftdurchlässigkeit dieses Vliesstoffes beträgt 3.200 l/m²s, gemessen bei 50 PA/5 cm² (DIN EN ISO 9237). Dabei ergibt sich eine hohe Luftdurchlässigkeit bei optimalem Schutz der abgedeckten Kultur. Der eingesetzte Vliesstoff weist isotrope Eigenschaften in Bezug auf die Höchstzugkraft und die Höchstzugdehnung auf. In anderen Ausführungen können die Bahnen 2, 3 auch aus einer Folien bestehen, die ebenfalls aus Polypropylen gebildet sein kann. Die Bahnen 2, 3, 11 überlappen sich an den Rändern derart, dass sich ein 30 cm breiter Überlapp-Bereich 4 bildet. In diesem Überlapp-Bereich 4 sind die Bahnen 2, 3, 11 mittels Ultraschall-Schweißen stoffschlüssig miteinander verbunden. Dabei ist die Schweißung so erfolgt, dass die Verbindung als streifenförmiges Muster 5 ausgebildet ist, wobei sich die Muster 5 aus vereinzelten Strukturen 6 zusammensetzen. Die Strukturen 6 sind in dieser Ausführung als Stäbchen ausgebildet. Weitere mögliche Strukturen 6 sind Punkte, Stäbchen, Kreisbögen oder Stäbchen mit Verdickungen an beiden Enden. In dem Überlapp-Bereich 4 sind zwei einander parallele Muster 5 angeordnet. Die Bahnenware kann vorteilhafterweise mit einem Randstreifen, beispielsweise in einer Breite von 25 cm versehen sein. Dieser Randstreifen besteht aus einem Vliesstoff mit einem höheren Flächengewicht, in dieser Ausführung 30 g/m². Dieser Randstreifen ist mit dem erfindungsgemäßen Verfahren stoffschlüssig mit der Bahnenware verbunden. Der Vorteil des Randstreifens liegt in der Erhöhung der Festigkeit des Randbereichs, Des Weiteren kann der Randbereich mit Gegenständen beispielsweise Steinen beschwert werden, um die Bahnenware in ihrer Lage zu fixieren. Zur Herstellung der Bahnenware 1 werden mindestens zwei Vliesstoff- und/oder Folienbahnen (2, 3) aus thermoplastischen Kunststoffen kombiniert, so dass diese jeweils auf einer Seite parallel zu ihrer Längserstreckung miteinander überlappen. Danach werden die Bahnen 2, 3, 11 per Ultraschallverschweißen so miteinander verschweißt, dass ein streifenförmiges Muster 5 aus vereinzelten Strukturen 6 entsteht.

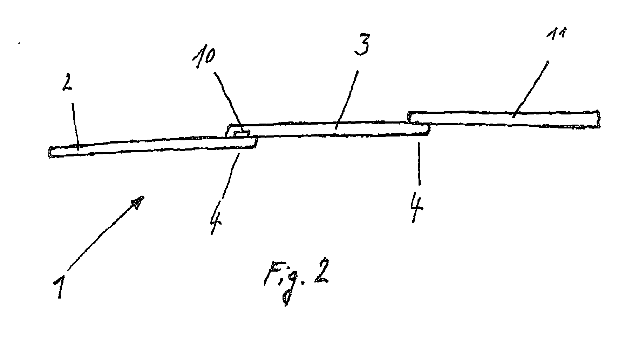

Figur 2 zeigt die Bahnenware 1 gemäß Figur 1 in der Seitenansicht. In dem links abgebildeten Überlapp-Bereich 4 ist zusätzlich ein Verstärkungsstreifen 10 angeordnet, der je nach Material der Bahn 2, 3, 11 aus Folie oder aus einem Vliesstoff besteht.

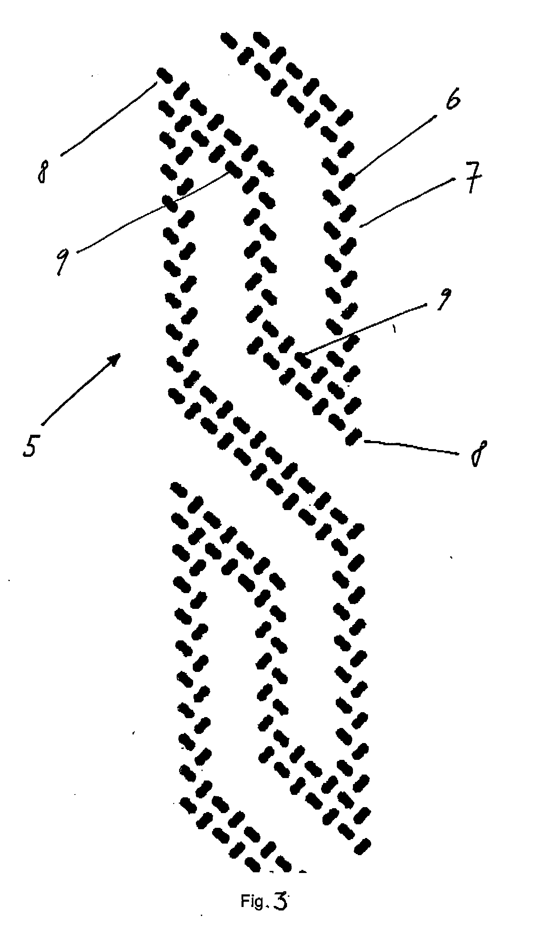

Figur 3 zeigt im Detail ein streifenförmiges Muster 5 für eine Bahnenware gemäß Figur 1. Das streifenförmige Muster 5 zeichnet sich durch eine Mäanderfom aus. Dabei sind drei streifenförmige Muster 5 aus gegeneinander versetzten Abschnitten 7 von Strukturen 6 gebildet, wobei die Abschnitte 7 an ihren Enden 8 durch quer verlaufende weitere Abschnitte 9 von Strukturen 6 miteinander verbunden sind. Dadurch ist das aus einzelnen Strukturen 6 gebildete Muster 5 nicht geradlinig und weist durch den mäanderförmigen Verlauf Unterbrechungen in der Längsrichtung auf. Die Strukturen 6 weisen die Form zweier ineinander greifender Kreise auf, so dass sich insgesamt eine stäbchenförmige Ausprägung mit Verdickungen an beiden Enden ("Knochen") ergibt.

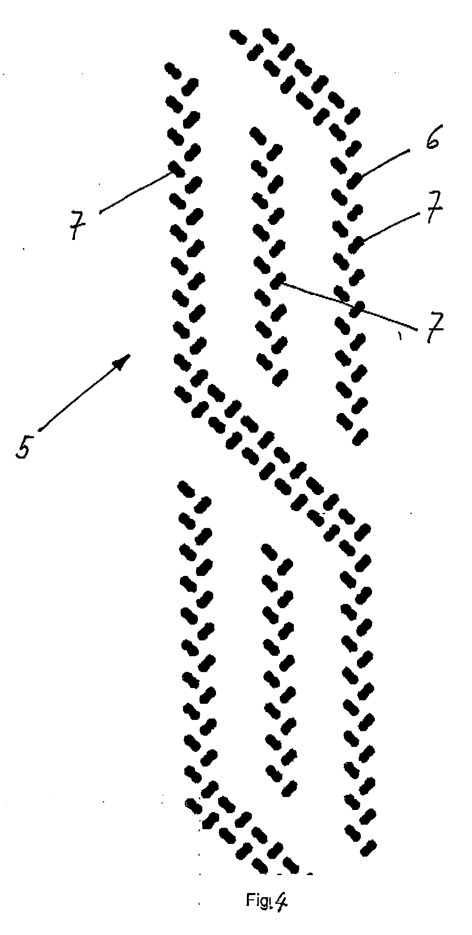

Figur 4 zeigt im Detail ein weiteres streifenförmiges Muster 5 für eine Bahnenware gemäß Figur 1. Dieses Muster 5 ähnelt dem in Figur 3 gezeigten, wird jedoch aus unterbrochenen Abschnitten 7 von Strukturen 6 gebildet.

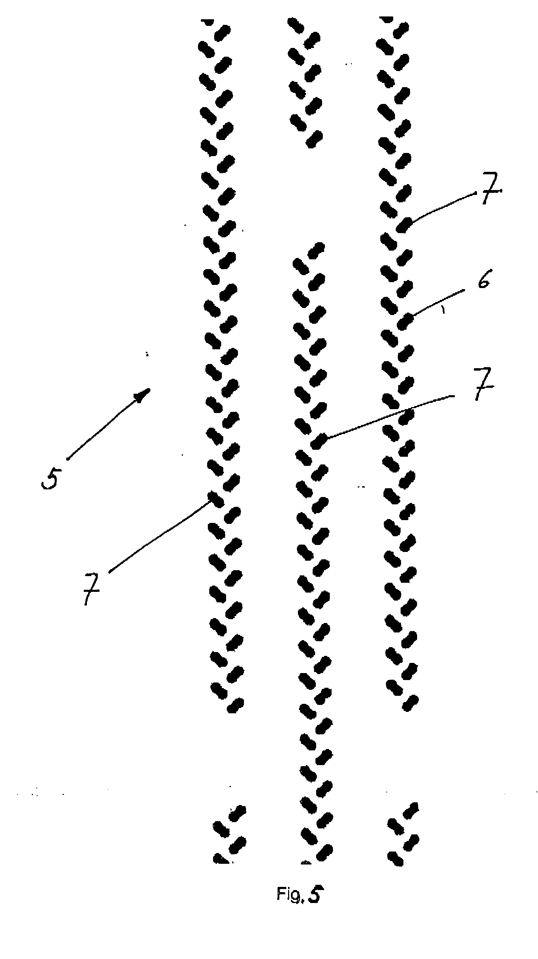

Figur 5 zeigt im Detail ein weiteres streifenförmiges Muster 5 für eine Bahnenware gemäß Figur 1. Dieses Muster 5 ist aus drei parallel zueinander verlaufenden, aus einzelnen Abschnitten 7 aus Strukturen 6 gebildeten Linien, die voneinander beabstandet sind, aufgebaut.

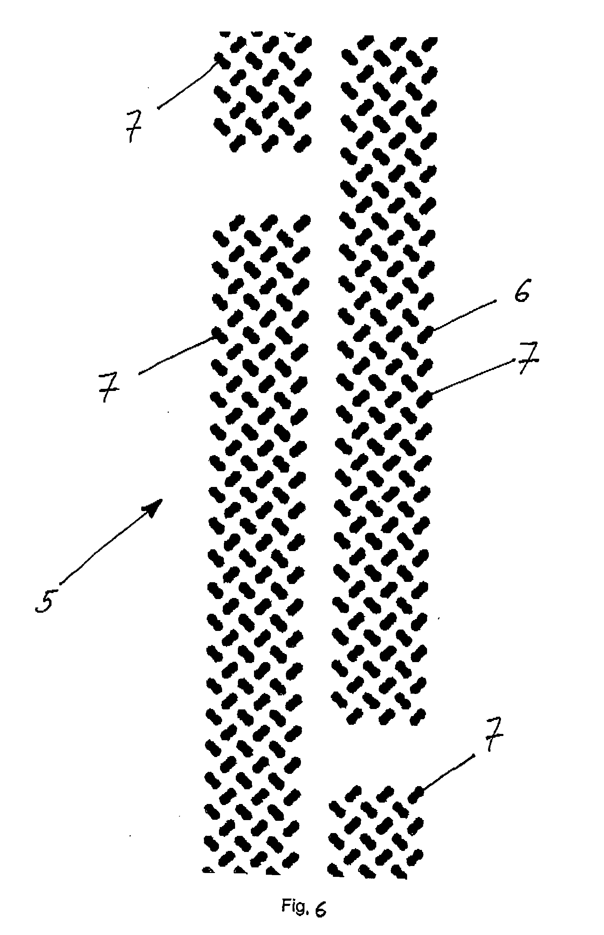

Figur 6 zeigt im Detail ein weiteres streifenförmiges Muster 5 für eine Bahnenware gemäß Figur 1. Dieses Muster 5 ähnelt dem in Figur 5 gezeigten. In dieser Ausführung sind die einzelnen Abschnitte 7 sind jedoch breiter ausgeführt. Infolge der insgesamt größeren verschweißten Fläche kann dieser Verbund höhere Lasten aufnehmen.

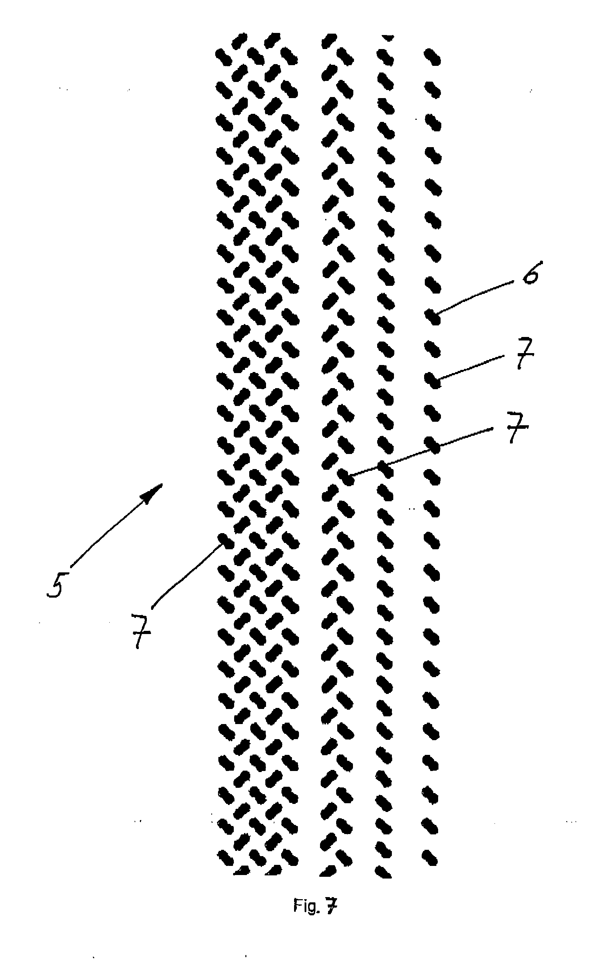

Figur 7 Dieses Muster 5 ist aus vier parallel zueinander verlaufenden aus Strukturen 6 gebildeten und voneinander beabstandet verlaufenden Abschnitten 7 aufgebaut. Die einzelnen Abschnitte 7 sind unterschiedlich breit.

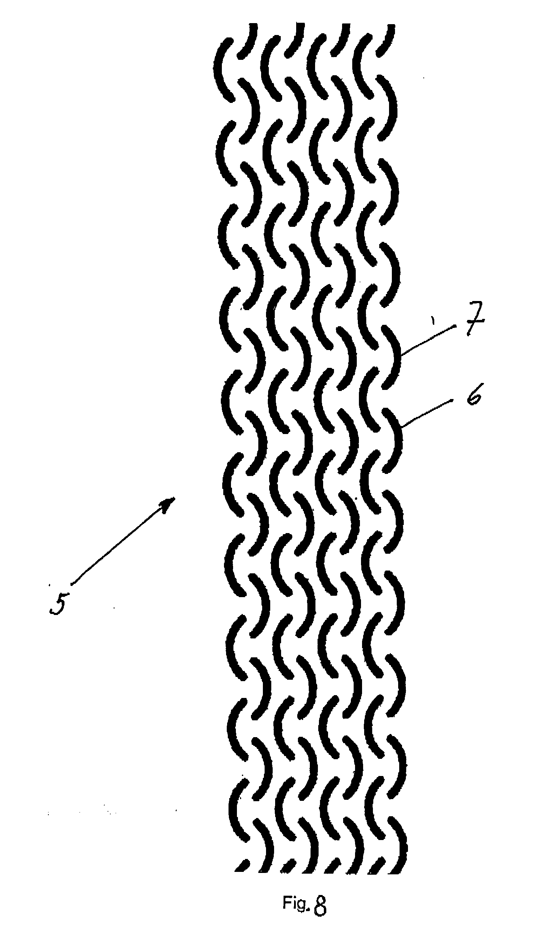

Figur 8 zeigt im Detail ein weiteres streifenförmiges Muster 5 für eine Bahnenware gemäß Figur 1. Dieses Muster 5 besteht aus bogenförmigen Abschnitten 7 die durch die Strukturen 6 gebildet sind.

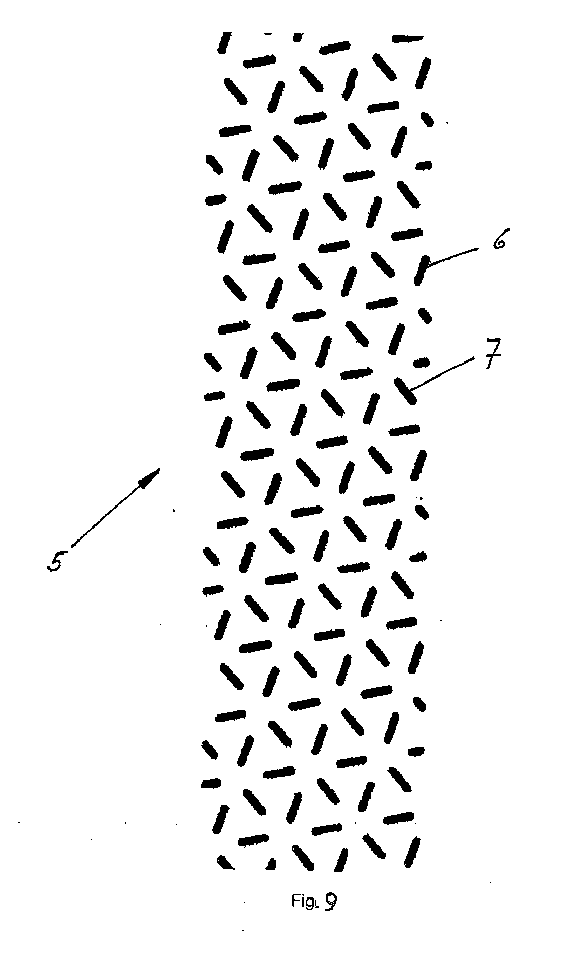

Figur 9 zeigt im Detail ein weiteres streifenförmiges Muster 5 für eine Bahnenware gemäß Figur 1. Dieses besteht aus stäbchenförmigen Abschnitten 7 die in unterschiedlichen Richtungen orientiert sind. Die stäbchenförmigen Abschnitte 7 sind durch die Strukturen 6 gebildet.

## Patentansprüche

1. Bahnenware (1) zum Schutz von Pflanzenkulturen gegen Witterungseinflüsse, umfassend mindestens zwei Bahnen (2, 3) von Vliesstoffen und/oder Folien, die zumindest teilweise einander überlappen und in den Überlapp-Bereichen (4) stoffschlüssig miteinander verbunden sind, **dadurch gekennzeichnet, dass** die Verbindung als streifenförmiges Muster (5) ausgebildet ist, die sich aus vereinzelten Strukturen (6) zusammensetzt.

2. Bahnenware nach Anspruch 1, **dadurch gekennzeichnet, dass** die Strukturen (6) als Punkte, Stäbchen, Kreisbögen oder Stäbchen mit Verdickungen an beiden Enden oder deren Mischungen ausgebildet sind.

3. Bahnenware nach Anspruch 1 oder 2, **dadurch gekennzeichnet, dass** zumindest zwei einander parallele Muster (5) in dem Überlapp-Bereich (4) angeordnet sind.

4. Bahnenware nach einem der Ansprüche 1 bis 3, **dadurch gekennzeichnet, dass** das streifenförmige Muster (5) unterbrochen ausgebildet sind.

5. Bahnenware nach einem der Ansprüche 1 bis 4, **dadurch gekennzeichnet, dass** zumindest zwei streifenförmige Muster (5) aus gegeneinander versetzten Abschnitten (7) von Strukturen (6) bestehen, wobei die Abschnitte (7) an ihren Enden (8) durch quer verlaufende weitere Abschnitte (9) von Strukturen (6) miteinander verbunden sind.

6. Bahnenware nach einem der Ansprüche 1 bis 5, **dadurch gekennzeichnet, dass** die stoffschlüssige Verbindung der Bahnen (2, 3) durch eine Ultraschall-Verschweißung gebildet ist.

7. Bahnenware nach einem der Ansprüche 1 bis 6, **dadurch gekennzeichnet, dass** in den Überlapp-Bereichen (4) der Bahnen (2, 3) ein Verstärkungsstreifen (10) aus Folie und/oder aus einem Vliesstoff angeordnet ist.

8. Bahnenware nach einem der Ansprüche 1 bis 7, **dadurch gekennzeichnet, dass** die Vliesstoffbahnen (2, 3) aus Spinnvliesstoffen oder Stapelfaservliesstoffen gebildet sind.

9. Bahnenware nach einem der Ansprüche 1 bis 8, **dadurch gekennzeichnet, dass** die Vliesstoffbahnen (2, 3) aus Polyesterfasern oder vorzugsweise aus Polypropylenfasern bestehen

10. Bahnenware nach einem der Ansprüche 1 bis 9, **dadurch gekennzeichnet, dass** die Flächengewichte der Vliesstoff oder Folienbahnen (2, 3) 10 bis 150 g/m² betragen.

11. Verfahren zur Herstellung der Bahnenware (1) nach einem der vorherigen Ansprüche, umfassend die Maßnahmen kombinieren von mindestens zwei Vliesstoff- und/oder Folienbahnen (2,3) aus thermoplastischen Kunststoffen, so dass diese jeweils auf einer Seite parallel zu ihrer Längserstreckung miteinander überlappen, und Ultraschallverschweißen der Vliesstoff- und/oder Folienbahnen (2, 3) in den Überlapp-Bereichen (4), so dass ein streifenförmiges Muster (5) aus vereinzelten Strukturen (6) entsteht.

12. Verwendung der Bahnenware (1) nach einem der vorherigen Ansprüche zum Abdecken von Pflanzenkulturen und/oder Böden als Schutz gegen Wifferungseinflüsse.
